# DEMANDE DE BREVET EUROPEEN

(11) **EP 4 382 360 A1**
(43) Date de publication de la demande: **12.06.2024**
(21) Numéro de dépôt: 23211810.9
(22) Date de dépôt: 23.11.2023
(51) Int. Cl.: B60N 3/06

(54) **DISPOSITIF REPOSE-PIED D'UN VÉHICULE AUTOMOBILE**

(30) Priorité: 09.12.2022 FR 2213074
(71) Demandeur: Renault s.a.s, 92100 Boulogne Billancourt (FR)
(72) Inventeur: CONFOLENT, Laurent, 78280 GUYANCOURT (FR); MULATO, Gilles, 78280 GUYANCOURT (FR); PIMORT, Isabelle, 78280 GUYANCOURT (FR)

(57) **Abrégé**

Dispositif repose-pied configuré pour être situé dans une cave à pieds d'un véhicule automobile, le dispositif repose-pied (R) comprenant deux repose-pieds (R1, R2), offrant deux plans d'appui pour un pied, disposés côte-à-côte, ayant sensiblement une même direction longitudinale et une même direction transversale, lesdits deux plans d'appui étant disposés côte-à-côte selon leur direction transversale, et elle concerne une cave à pieds (C ) comprenant ledit dispositif (R).

## Description

L'invention concerne un dispositif repose-pied situé face à un siège d'un véhicule automobile, dans une cave à pieds d'un véhicule automobile.

La cave à pieds d'un véhicule automobile est la partie inférieure de l'habitacle, devant un siège, destinée à accueillir les pieds de l'occupant du siège.

L'invention concerne en particulier un dispositif repose-pied situé du côté du siège du conducteur, à proximité des pédales de commande du véhicule actionnées au pied.

Pour reposer son pied gauche qui n'est pas ou le moins souvent sollicité lors de la conduite, le conducteur d'une voiture ne dispose que d'un repose-pied unique, situé à proximité des pédales de commande du véhicule actionnées au pied. S'il souhaite changer de position de pied, notamment au cours d'un trajet de longue durée, il n'a le choix qu'entre le repose-pied et le plancher du véhicule.

Le repose-pied est en général une cale plus ou moins pentue, offrant un plan d'appui ainsi plus ou moins incliné sur lequel le pied peut reposer, cette cale étant située en extrémité transversale, contre une paroi latérale de la cave à pieds, et du côté de l'ouverture de porte de l'habitacle pour un véhicule à conduite à droite.

Il existe donc un besoin pour offrir un meilleur confort postural pour un pied d'un occupant d'un véhicule, en particulier pour le pied gauche du conducteur, et plus largement la jambe gauche du conducteur.

L'invention vise à répondre à ce besoin.

A cet effet, l'invention propose un dispositif repose-pied configuré pour être situé dans une cave à pieds d'un véhicule automobile, le dispositif repose-pied comprenant deux repose-pieds offrant deux plans d'appui pour un pied disposés côte-à-côte, ayant sensiblement une même direction longitudinale et une même direction transversale, lesdits deux plans d'appui étant disposés côte-à-côte selon leur direction transversale.

Selon un mode de réalisation de l'invention, le plan d'appui de l'un des repose-pieds et le plan d'appui de l'autre repose-pied sont décalés l'un par rapport à l'autre longitudinalement, en particulier ils sont uniquement décalés longitudinalement. Selon un autre mode de réalisation de l'invention, le plan d'appui de l'un des repose-pieds et le plan d'appui de l'autre repose-pied sont décalés l'un par rapport à l'autre angulairement par rapport à l'horizontale. Autrement dit l'un des plans d'appui est plus pentu que l'autre. En particulier les deux plans d'appui sont uniquement décalés angulairement. Selon un autre mode de réalisation de l'invention, le plan d'appui de l'un des repose-pieds et le plan d'appui de l'autre repose-pied sont décalés l'un par rapport à l'autre à la fois longitudinalement et angulairement par rapport à l'horizontale.

Selon un mode de réalisation de l'invention, le dispositif repose-pied comprend essentiellement une monocoque ayant une forme de deux cales, l'une des deux cales formant l'un des repose-pieds et l'autre coque formant l'autre repose-pied. Selon un autre mode de réalisation de l'invention, le dispositif repose-pied comprend essentiellement deux coques, chacune ayant une forme de cale, l'une des deux coques formant l'un des repose-pieds et l'autre coque formant l'autre repose-pied. Les deux cales ensuite se fixent côte-à-côte dans la cave à pieds.

La monocoque ou les deux coques peuvent être recouvertes d'un tapis de sol ou similaire. La monocoque ou les deux coques peuvent aussi être intégrées au tapis de sol ou similaire.

L'invention a également pour objet une cave à pieds d'un véhicule automobile comprenant un dispositif repose-pied tel que décrit précédemment et qui est fixe. Selon un mode préféré de réalisation de l'invention, ladite cave à pieds ne comprend que deux pédales de commande du véhicule, lesdites pédales étant côte-à-côte, et ledit dispositif repose-pied est situé transversalement à côté de l'une des pédales. En particulier les deux pédales de commande du véhicule sont la pédale d'accélérateur et la pédale de frein, et ledit dispositif repose-pied est situé transversalement à gauche de la pédale de frein.

L'invention a également pour objet un véhicule automobile comprenant un dispositif repose-pied ou une cave à pieds tels que décrits précédemment. De préférence, ledit véhicule automobile est à boite de vitesses automatique. En particulier ledit véhicule comporte des moyens informatisés permettant un mode de conduite assistée, en particulier un mode de conduite assistée par un régulateur de vitesses.

Plus particulièrement le dispositif repose-pied selon l'invention est destiné au pied gauche d'une personne pour lui offrir un confort, notamment destiné au pied gauche du conducteur.

D'autres particularités et avantages de l'invention ressortiront à la lecture de la description faite ci-après de plusieurs modes de réalisation particuliers de l'invention, donnés à titre indicatif mais non limitatifs, en référence aux dessins annexés sur lesquels :
[Fig. 1A] est une vue en perspective, de face et de dessus, d'une cave à pieds d'un véhicule automobile comprenant un dispositif repose-pied d'un véhicule automobile selon un premier mode de réalisation de l'invention.
[Fig. 1B] est une vue schématique de côté du dispositif repose-pied représenté en figure 1A, un pied en appui y étant symbolisé.
[Fig. 2A] est une vue en perspective, de face et de dessus, d'une cave à pieds d'un véhicule automobile comprenant un dispositif repose-pied d'un véhicule automobile selon un deuxième mode de réalisation de l'invention.
[Fig. 2B] est une vue schématique de côté du dispositif repose-pied représenté en figure 2A, un pied en appui y étant symbolisé.
[Fig. 3A] est une vue en perspective de face et de dessus, d'une cave à pieds d'un véhicule automobile comprenant un dispositif repose-pied d'un véhicule automobile selon un troisième mode de réalisation de l'invention.
[Fig. 3B] est une vue schématique de côté du dispositif repose-pied représenté en figure 3A, un pied en appui y étant symbolisé.
[Fig. 4A] est une vue en perspective, de face et de dessus, d'une cave à pieds d'un véhicule automobile comprenant un dispositif repose-pied d'un véhicule automobile selon un quatrième mode de réalisation de l'invention.
[Fig. 4B] est une vue schématique de côté du dispositif repose-pied représenté en figure 4A, un pied en appui y étant symbolisé.
[Fig. 5] représente une vue schématique de dessus d'une cave à pieds comprenant des pédales de commande d'un véhicule et un dispositif repose-pied selon un mode de réalisation de l'invention, les différentes positions des pieds possibles y étant représentées.

Les orientations exprimées dans la description des figures sont données en référence à un repère orthonormé classique XYZ d'un véhicule automobile dans lequel X représente la direction longitudinale avant-arrière du véhicule, orientée vers l'arrière, Y la direction transversale du véhicule, orientée vers la droite, et Z la direction verticale orientée vers le haut du véhicule, les roues de ce dernier reposant sur le sol. Les directions correspondent aussi aux directions respectivement longitudinale, transversale et verticale du dispositif repose-pied selon l'invention installé en sa position usuelle dans une cave à pieds du véhicule.

Sauf précisions contraires, les termes avant, arrière, supérieur, inférieur, font ainsi référence aux directions du véhicule et à celles du dispositif repose-pied selon l'invention installé en sa position usuelle dans une cave à pieds du véhicule.

Des références identiques pourront être utilisées d'une figure à l'autre pour désigner des éléments identiques ou similaires.

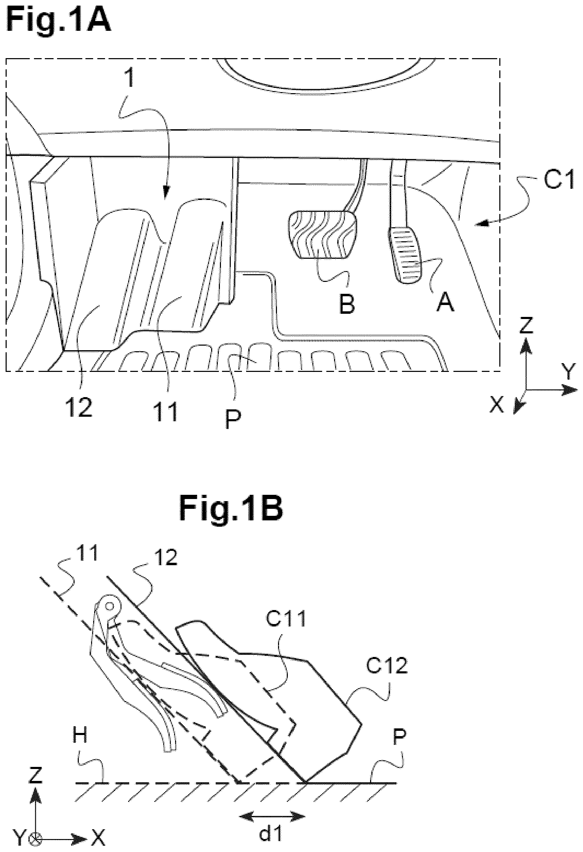

Les figures 1 à 4 représentent différents modes de réalisation d'un dispositif repose-pied selon l'invention, situé dans une cave à pieds à l'avant du siège du conducteur, référencée respectivement C1, C2, C3, C4, comprenant en partie inférieure un plancher P recouvert d'un tapis, et équipée d'une pédale d'accélérateur A et une pédale de frein B.

Sur les figures en vue latérale, l'horizontale est symbolisée par une ligne en pointillés référencée « H ». Cette ligne H est symbolisée dans le prolongement de la ligne de coupe du plan moyen du plancher P qui est sensiblement horizontal.

Chaque dispositif repose-pied comprend deux repose-pieds constituant un repose-pied distal des pédales de commande du véhicule et un repose-pied proximal desdites pédales, plus particulièrement de la pédale de frein B selon les exemples. Chaque repose-pied d'un dispositif repose-pied offre un plan supérieur d'appui pour le pied ayant une surface supérieure de taille adaptée à celle d'une chaussure d'une personne adulte.

Sur les figures, un repose-pied et son plan d'appui pour le pied portent le même signe de référence.

Ces plans supérieurs d'appui sont disposés côte-à-côte suivant la direction transverse du véhicule. Ils sont sensiblement parallèles entre eux selon leur direction longitudinale (direction X). Ils ont sensiblement la même direction longitudinale et la même direction transversale.

Selon une première configuration représentée en Fig.1A et Fig.1B, le dispositif repose-pied 1 est tel que le plan d'appui du repose-pied distal 12 et le plan d'appui du repose-pied proximal 11 sont décalés longitudinalement (direction X) l'un par rapport à l'autre.

La vue latérale Fig.1B montre la position d'un pied gauche symbolisé par une chaussure C12, en trait plein, en appui sur le plan d'appui distal 12 représenté en trait plein, et la position du même pied gauche symbolisé par une chaussure C11, en traits pointillés, en appui sur le plan d'appui proximal 11 représenté en traits pointillés.

Selon l'exemple, comme le montre plus particulièrement cette vue latérale Fig.1B, le plan d'appui proximal 11 est avancé, c'est-à-dire qu'il est décalé d'une distance longitudinale « d1 » vers l'avant du véhicule par rapport au plan d'appui distal 12. Les plans d'appui proximal et distal ont sensiblement la même longueur selon cet exemple.

Dans une variante non illustrée, le décalage longitudinal entre les deux plans d'appui proximal et distal peut provenir d'une différence de longueurs, l'un étant plus long que l'autre de sorte que leurs côtés respectifs avant et/ou arrière seront décalés. Par exemple, le décalage longitudinal entre les deux plans d'appui peut être fait vers l'avant, par exemple les deux plans ont leur côté arrière respectif (côté orienté vers le siège) au même niveau, mais l'un est plus long que l'autre de sorte que leurs côtés avant sont décalés.

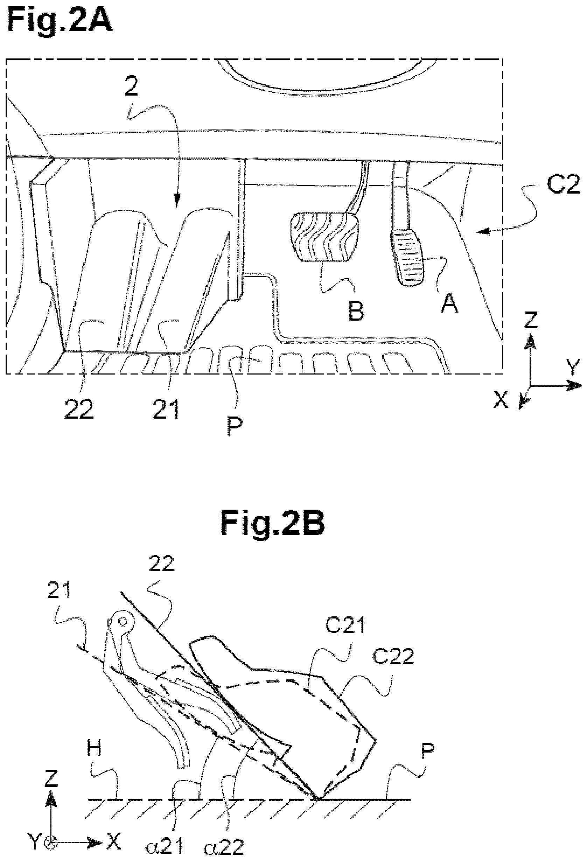

Selon une deuxième configuration représentée en Fig.2A et Fig.2B, le dispositif repose-pied 2 est tel que le plan d'appui du repose-pied distal 22 et le plan d'appui du repose-pied proximal 21 sont décalés angulairement par rapport à un plan horizontal, l'un par rapport à l'autre. La vue latérale Fig.2B montre la position d'un pied gauche symbolisé par une chaussure C22, en trait plein, en appui sur le plan d'appui distal 22 représenté en trait plein, et la position du même pied gauche symbolisé par une chaussure C21, en traits pointillés, en appui sur le plan d'appui proximal 21 représenté en traits pointillés.

Selon l'exemple, comme le montre plus particulièrement cette vue latérale Fig.2B, le plan d'appui distal 22 est plus pentu que le plan d'appui proximal 21, l'angle α22 du plan d'appui distal 22 avec l'horizontale H étant d'une valeur supérieure à l'angle α21 du plan d'appui proximal 21 avec l'horizontale H.

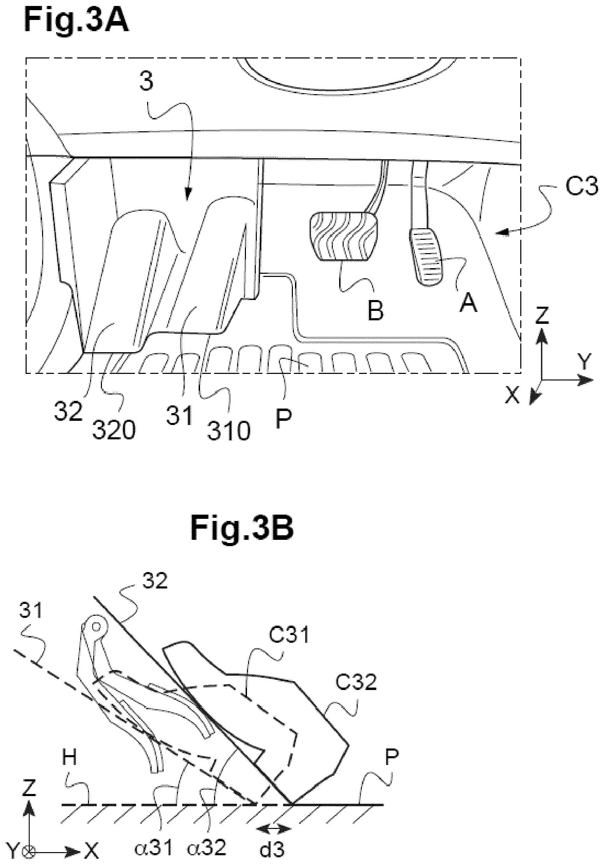

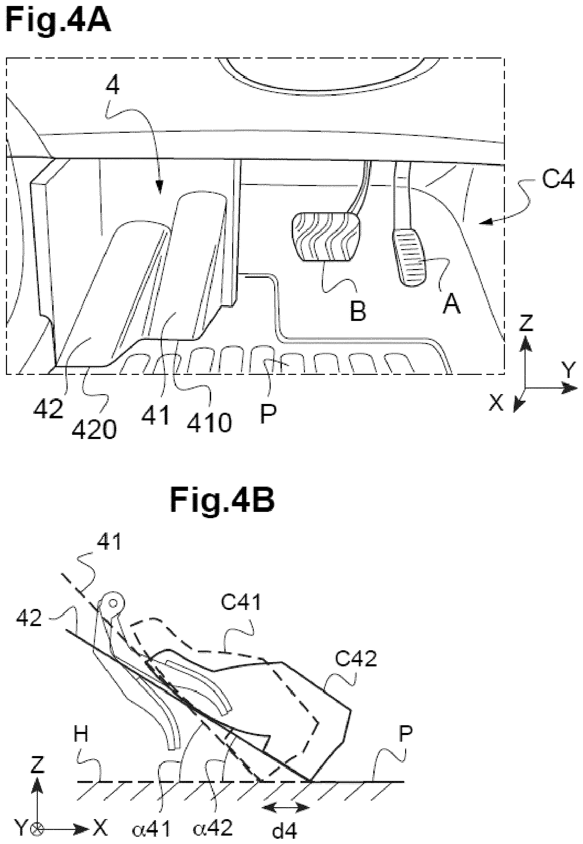

Selon une troisième et une quatrième configurations représentées respectivement aux figures 3 (Fig.3A et Fig.3B), et aux figures 4 (Fig.4A et Fig.4B), le plan d'appui du repose-pied distal et le plan d'appui du repose-pied proximal sont décalés l'un par rapport à l'autre, à la fois longitudinalement (direction X) et angulairement par rapport à un plan horizontal.

Selon l'exemple représenté par la troisième configuration illustrée en Fig.3A et Fig.3B, le dispositif repose-pied 3 est tel que le plan d'appui du repose-pied distal 32 est reculé et plus pentu que le plan d'appui du repose-pied proximal 31. La vue latérale Fig.3B montre la position d'un pied gauche symbolisé par une chaussure C32, en trait plein, en appui sur le plan d'appui distal 32 représenté en trait plein, et la position du même pied gauche symbolisé par une chaussure C31, en traits pointillés, en appui sur le plan d'appui proximal 31 représenté en traits pointillés.

Selon l'exemple, comme le montre plus particulièrement cette vue latérale Fig.3B, le plan d'appui distal 32 est plus pentu que le plan d'appui proximal 31, l'angle α32 du plan d'appui distal 22 avec l'horizontale H étant d'une valeur supérieure à l'angle α31 du plan d'appui proximal 31 avec l'horizontale H. En outre, le plan d'appui distal 32 est reculé, c'est-à-dire que son bord arrière 320 est décalé par rapport au bord arrière 310 du plan d'appui proximal 31 d'une distance longitudinale « d3 », en direction du siège.

Selon l'exemple représenté par la quatrième configuration d'un repose-pied 4, illustrée en Fig.4A et Fig.4B, le plan d'appui du repose-pied distal 42 est reculé, c'est-à-dire décalé en direction du siège, par rapport à la position du plan d'appui du repose-pied proximal 41, et le plan d'appui proximal 41 est plus pentu que le plan d'appui distal 42.

La vue latérale Fig.4B montre la position d'un pied gauche symbolisé par une chaussure C42, en trait plein, en appui sur le plan d'appui distal 42 représenté en trait plein, et la position du même pied gauche symbolisé par une chaussure C41, en traits pointillés, en appui sur le plan d'appui proximal 41 représenté en traits pointillés.

Selon l'exemple, comme le montre plus particulièrement cette vue latérale Fig.4B, le plan d'appui proximal 41 est plus pentu que le plan d'appui distal 42, l'angle α41 du plan d'appui proximal 41 avec l'horizontale H étant d'une valeur supérieure à l'angle α42 du plan d'appui distal 42 avec l'horizontale H. En outre, le plan d'appui distal 42 est reculé, de sorte que son bord arrière 420 est décalé par rapport au bord arrière 410 du plan d'appui proximal 41 d'une distance longitudinale « d4 », en direction du siège.

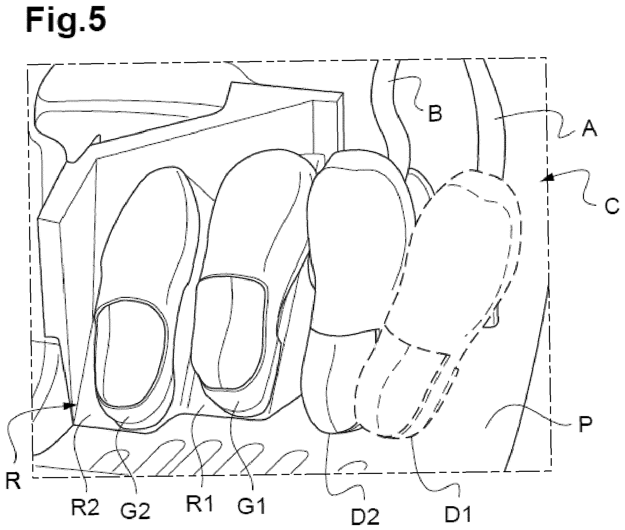

Fig.5 illustre schématiquement une cave à pieds « C », le tapis de sol étant enlevé, située face au siège du conducteur d'un véhicule automobile. Ladite cave comprend deux pédales de commande d'un véhicule automatique, la pédale la plus à droite étant la pédale de l'accélérateur A et l'autre pédale étant la pédale de frein B, ainsi qu'un dispositif repose-pied R comportant deux repose-pieds R1, R2 conformément à l'invention. La figure 5 illustre schématiquement le pied droit D1, D2 du conducteur qui peut passer d'une pédale à l'autre lors de la conduite. En outre, la figure illustre le pied gauche G1, G2 du conducteur qui peut se positionner soit sur le plan d'appui d'un repose-pied R1 proximal de la pédale de frein B, soit sur le plan d'appui du repose-pied R2 situé juste à côté du repose-pied R1 proximal, et qui est distal des pédales.

Le dispositif repose-pied selon l'invention permet à son utilisateur, notamment au conducteur, sans aucune action de réglage, de disposer de deux positions possibles de repos de son pied gauche, selon son confort. L'utilisateur dispose de deux positions confortables de jambe possibles, qui assurent chacune un appui du pied et un angle entre le pied et la cheville ergonomiques. L'utilisateur peut passer facilement d'un repose-pied à l'autre en cours de conduite, sans danger puisqu'il n'y a pas de réglage à faire, chaque repose-pied étant fixe et stable. Le dispositif repose-pied à deux positions peut être utilisé avantageusement lors d'un trajet long, et/ou en particulier être utilisé lors d'un mode de conduite assisté tel que celui utilisant un régulateur de vitesse.

Le dispositif repose-pied R selon l'invention peut être réalisé de manière connue en soi, par moulage, et la pièce moulée est disposée entre l'isolant et le tapis de sol de la cave à pieds, le repose-pied distal étant situé contre une paroi latérale de la cave à pieds, et, pour un véhicule à conduite à droite, du côté de l'ouverture de porte de l'habitacle.

Selon un mode de fabrication du dispositif repose-pied, le repose-pied peut être réalisé par moulage d'une matière plastique suivant une forme de monocoque comprenant les deux repose-pieds disposés côte-à-côte dans le sens transversal (direction Y). Les repose-pieds ont chacun une forme de cale globalement parallélépipédique, il se peut néanmoins que la partie avant de la cale soit biaisée selon la place disponible pour le dispositif repose-pied en la partie avant de la cave à pieds, la paroi de la cave à pieds étant inclinée à l'avant des pédales de vitesse. Ils sont sensiblement parallèles entre eux suivant la direction longitudinale X du véhicule.

Selon un autre mode de fabrication du dispositif repose-pied, les deux repose-pieds du dispositif peuvent être réalisés séparément par moulage de deux coques unitaires, chacun repose-pied ayant la forme d'une cale globalement parallélépipédique, puis être fixés côte-à-côte dans la cave à pieds.

L'invention s'applique de préférence aux véhicules automatiques, donc qui n'ont que deux pédales de commande (frein et accélérateur). Toutefois il peut convenir à un véhicule qui aurait trois pédales si l'espace disponible latéralement à la pédale la plus excentrée dans la cave à pieds est suffisant pour permettre d'y introduire un tel dispositif à double repose-pied.

## Revendications

1. Dispositif repose-pied configuré pour être situé dans une cave à pieds d'un véhicule automobile, **caractérisé en ce que** le dispositif repose-pied (1, 2, 3, 4, R) comprend deux repose-pieds (11, 12, 21, 22, 31, 32, 41, 42, R1, R2) offrant deux plans d'appui pour un pied disposés côte-à-côte, ayant sensiblement une même direction longitudinale (X) et une même direction transversale (Y), lesdits deux plans d'appui étant disposés côte-à-côte selon leur direction transversale.

2. Dispositif repose-pied selon la revendication 1, **caractérisé en ce que** le plan d'appui de l'un des repose-pieds (11, 12) et le plan d'appui de l'autre repose-pied (11, 12) sont décalés l'un par rapport à l'autre longitudinalement.

3. Dispositif repose-pied selon la revendication 1, **caractérisé en ce que** le plan d'appui de l'un des repose-pieds (21, 22) et le plan d'appui de l'autre repose-pied (21, 22) sont décalés l'un par rapport à l'autre angulairement par rapport à l'horizontale.

4. Dispositif repose-pied selon la revendication 1, **caractérisé en ce que** le plan d'appui de l'un des repose-pieds (31, 32 ; 41, 42) et le plan d'appui de l'autre repose-pied (31, 32 ; 41, 42) sont décalés l'un par rapport à l'autre à la fois longitudinalement et angulairement par rapport à l'horizontale.

5. Dispositif repose-pied selon l'une quelconque des revendications 1 à 4, **caractérisé en ce qu'**il comprend essentiellement une monocoque ayant une forme de deux cales, l'une des deux cales formant l'un des repose-pieds et l'autre coque formant l'autre repose-pied.

6. Dispositif repose-pied selon l'une quelconque des revendications 1 à 4, **caractérisé en ce qu'**il comprend essentiellement deux coques, chacune ayant une forme de cale, l'une des deux coques formant l'un des repose-pieds et l'autre coque formant l'autre repose-pied.

7. Cave à pieds (C1, C2, C3, C4, C ) d'un véhicule automobile comprenant un dispositif repose-pied (1, 2, 3, 4,R ) selon l'une quelconque des revendications 1 à 6.

8. Cave à pieds selon la revendication 7, **caractérisée en ce qu'**elle ne comprend que deux pédales de commande du véhicule (A, B), lesdites pédales étant côte-à-côte, et ledit dispositif repose-pied est situé transversalement à côté de l'une des pédales.

9. Cave à pieds selon la revendication 8, **caractérisée en ce que** les deux pédales de commande du véhicule sont la pédale d'accélérateur (A) et la pédale de frein (B), et ledit dispositif repose-pied est situé transversalement à gauche de la pédale de frein.

10. Véhicule automobile comprenant un dispositif repose-pied (1, 2, 3, 4, R ) selon l'une quelconque des revendications 1 à 6, ou une cave à pieds (C1, C2, C3, C4, C) selon l'une quelconque des revendications 7 à 9.
